# EUROPEAN PATENT APPLICATION

(11) **EP 1 353 523 A1**
(43) Date of publication of application: **15.10.2003**
(21) Application number: 03007975.0
(22) Date of filing: 09.04.2003
(51) Int. Cl.: H04Q 7/38, H04Q 7/22

(54) **Apparatus and method for transmitting control information for multimedia broadcast/multicast service in a mobile communication system**

(30) Priority: 09.04.2002 KR 2002020743; 02.05.2002 KR 2002024259
(71) Applicant: SAMSUNG ELECTRONICS CO., LTD., Suwon-City, Kyungki-do (KR)
(72) Inventor: Kim, Sung-Hoon, Paldal-gu, Suwon-city, Kyungki-do (KR); Choi, Sung-Ho, Paldal-gu, Suwon-city, Kyungki-do (KR); Park, Joon-Goo, Paldal-gu, Suwon-city, Kyungki-do (KR); Lee, Kook-Heui, Paldal-gu, Suwon-city, Kyungki-do (KR)
(74) Representative: Grünecker, Kinkeldey, Stockmair & Schwanhäusser Anwaltssozietät

(57) **Abstract**

An apparatus and method for transmitting control information to provide an MBMS (multimedia broadcast/multicast service) service in a mobile communication system. Upon receipt of a request for an MBMS service from at least one UE (user equipment), a service ID is assigned to the MBMS service and a MAC (media access control) message containing the service ID and control information of the MBMS service is transmitted to the at least one UE on a common channel.

## Description

### BACKGROUND OF THE INVENTION

### 1. Field of the Invention

The present invention relates generally to a mobile communication system, and in particular, to an apparatus and method for transmitting radio channel configuration information on a common channel to provide multimedia broadcast/multicast service (MBMS).

### 2. Description of the Related Art

Along with rapid development of communication technology, code division multiple access (CDMA) mobile communication systems provide multimedia multicast service that delivers a large volume of data such as packet data and circuit data, as well as voice service. To support the multimedia multicast communication, broadcast/multicast service has been introduced that broadcasts a service to a plurality of user equipments (UEs) from a single data source. The broadcast/multicast service is categorized into cell broadcast service (CBS) and multimedia broadcast/multicast service (MBMS). The CBS allows short messages to be sent to all subscribers within a cell, whereas the MBMS supports transmission of multimedia data (e.g., real-time audio & video, still image, and text).

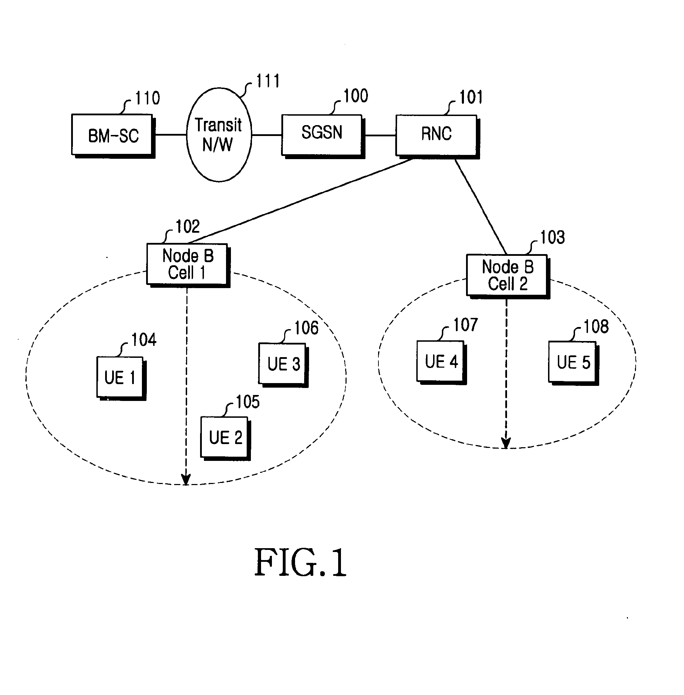

A network architecture for providing the MBMS in a mobile communication system will be described below with reference to FIG. 1. A plurality of MBMS types can be defined and each MBMS type is termed an MBMS service. In this sense, there are a plurality of MBMS services.

FIG. 1 illustrates the architecture of a network for providing the MBMS in a mobile communication system. Referring to FIG. 1, a broadcast/multicast-service center (BM-SC) 110 is a source for scheduling MBMS streams and providing them to a transmit network (N/W) 111 The transmit N/W 111 is between the BM-SC 110 and a serving GPRS support node (SGSN) 100, for delivering the received MBMS streams to the SGSN 100. The SGSN 100 can be configured with a gateway GPRS support node (GGSN) and an external network. It is assumed herein that a plurality of UEs are to receive the same MBMS service, for example, UE1 104, UE2 105 and UE3 106 within a first Node B (Node B1) 102, and UE4 107 and UE5 108 within a second Node B (Node B2) 103. The SGSN 100 controls MBMS-related services for the UEs. Specifically, it manages MBMS billing data for each UE and transmits MBMS data selectively to a radio network controller (RNC) 101. The SGSN 100 also forms and manages an SGSN service context for an MBMS service X and transmits streams for the MBMS service X to the RNC 101. The RNC 101 controls a plurality of Node Bs, transmits MBMS data received from the SGSN 100 to Node Bs having UEs requesting an MBMS service, controls radio channels established for the MBMS service, and forms and manages an RNC service context for the MBMS service X.

As illustrated in FIG. 1, a single radio channel is established between a node B and its UEs, for example, between Node B1 102 and UE1 104, UE2 105 and UE3 106. A home location register (HLR: not shown) is connected to the SGSN 100, for MBMS subscriber authentication.

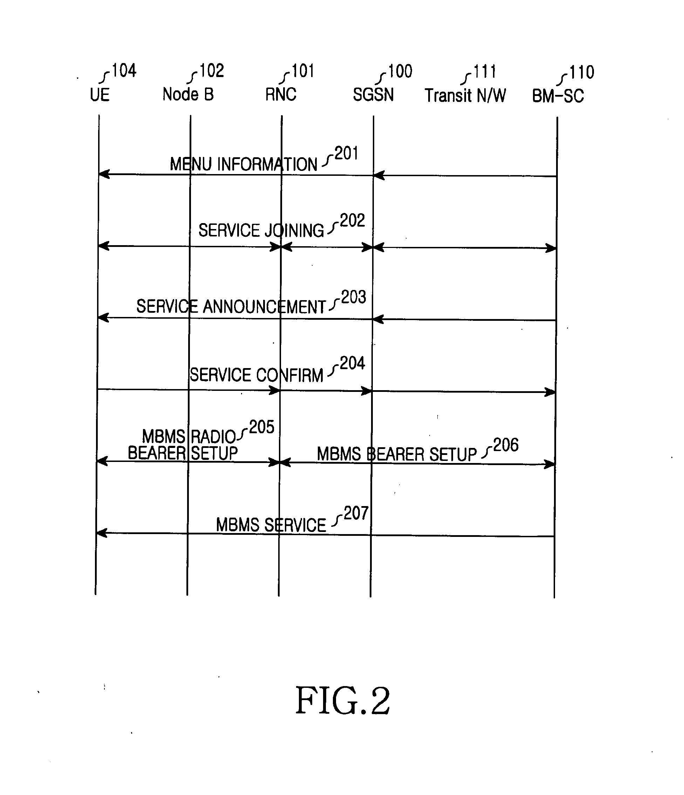

FIG. 2 is a diagram illustrating a signal flow for initiating an MBMS service in the mobile communication system Referring to FIG. 2, the BM-SC 110 transmits menu information about an available MBMS service to UEs 201. The BM-SC 110 transmits the menu information to predetermined service areas or only UEs requesting the MBMS. For clarity of description, the UE 104 is set as an MBMS subscriber. Upon receipt of the menu information, the UE 104 selects one of the MBMS services from the menu information and transmits to the BM-SC 110 a SERVICE JOINING message contains the BM-SC service ID of the selected MBMS service and information about the UE 104 via the path through the Node B 102, the RNC 101, the SGSN 100, and the transmit N/W 111 in step 202. The BM-SC 110 then transmits a response for the SERVICE JOINING message to the UE 104, taking the same path as the SERVICE JOINING message. The transmit N/W 111, the SGSN 100, and the RNC 101 have stored the ID of the UE 104 for use in initiating the MBMS service. In this manner, the BM-SC 110, the transmit N/W 111, the SGSN 100, and the RNC 101 detect the IDs and number of UEs that are to receive the same MBMS service.

After the MBMS service is requested and a response for the MBMS service request is transmitted, the BM-SC 110 transmits to the UE 104 a SERVICE ANNOUNCEMENT message indicating that the MBMS service will be initiated soon in step 203. If a plurality of UEs have requested the MBMS service, the SERVICE ANNOUNCEMENT message is transmitted to the UEs since the BM-SC 110, the transmit N/W 111, the SGSN 100, and the RNC 101 know the IDs and number of the UEs. The SERVICE ANNOUNCEMENT message is transmitted to the UE 104 through the transmit N/W 111, the SGSN 100 and the RNC 101. To do so, a paging procedure as defined in the universal mobile telecommunication system (UMTS) standards can be used. The reason for transmitting the SERVICE ANNOUNCEMENT message is to allow time for the transmit N/W 111, the SGSN 100, and the RNC 101 to establish a communication path for providing the MBMS service and to check the UEs that have requested the MBMS service.

Upon receipt of the SERVICE ANNOUNCEMENT message, the UE 104 transmits to the BM-SC 110 a SERVICE CONFIRM message, confirming that it is to receive the MBMS service in step 204. The transmission of the SERVICE CONFIRM message is carried out through the path running from the UE 104 to the BM-SC 110 through the RNC 101, the SGSN 100, and the transmit N/W 111. During this process, the RNC 101, the SGSN 100, and the transmit N/W 111 find out the service areas and UEs for which the MBMS service is destined. In practice, the communication path for the MBMS service has been established. The RNC 101 establishes a radio channel for transmitting MBMS streams to the UE 104, that is, an MBMS radio bearer in step 205 and the SGSN 100 establishes an MBMS bearer to transmit the MBMS streams to the RNC 101 in step 206. The RNC 101 establishes MBMS radio bearers only for Node Bs having the MBMS service-requesting UEs and the SGSN 101 also establishes MBMS bearers only for RNCs having the MBMS service-requesting UEs. Thus, the MBMS service is initiated by transmitting MBMS streams from the BM-SC 110 to the UE 104 via the established communication paths in step 207.

As described above, the provision of an MBMS service requires multiple transmissions of control information to individual UEs. Accordingly, there is a need for exploring a method of broadcasting control information such as radio channel configuration information to a plurality of UEs by a single control message.

### SUMMARY OF THE INVENTION

It is, therefore, an object of the present invention to provide an apparatus and method for broadcasting control information to UEs for each MBMS service in a mobile communication system.

It is another object of the present invention to provide an apparatus and method for broadcasting radio channel configuration information on a common channel to UEs that are to receive the same MBMS service in a mobile communication system.

It is a further object of the present invention to provide an apparatus and method for broadcasting radio channel configuration information on a common control channel to UEs that are to receive the same MBMS service in a mobile communication system.

It is still another object of the present invention to provide an apparatus and method for broadcasting common control information to UEs that are to receive the same MBMS service by a media access control (MAC) message.

The above objects are achieved by providing an apparatus and method for transmitting control information to provide an MBMS service in a mobile communication system.

According to one aspect of the present invention, in an MBMS control information transmitting method, upon receipt of a request for an MBMS service from at least one UE, a service ID is assigned to the MBMS service and a MAC message containing the service ID and control information of the MBMS service is transmitted to the at least one UE on a common channel.

According to another aspect of the present invention, in an MBMS control information receiving method, after requesting an MBMS service, a service ID identifying the MBMS service is received. Then a MAC message containing a service ID and control information of an MBMS service is received on a common channel and a control operation is performed according to the MBMS control information if the service ID included in the MAC message is identical to the service ID identifying the requested MBMS service.

According to a further aspect of the present invention, in an MBMS control information transmitting apparatus, a controller assigns, upon sensing a request for an MBMS service from at least one UE, a service ID to the MBMS service, and a MAC message generator generates a MAC message containing the service ID and control information of the MBMS service.

According to still another aspect of the present invention, in an MBMS control information receiving apparatus, a receiver receives, after requesting an MBMS service, a service ID identifying the MBMS service and receiving on a common channel a MAC message containing a service ID and control information of an MBMS service, and a service ID detector performs a control operation according to the MBMS control information if the service ID included in the MAC message is identical to the service ID identifying the requested MBMS service.

### BRIEF DESCRIPTION OF THE DRAWINGS

The above and other objects, features and advantages of the present invention will become more apparent from the following detailed description when taken in conjunction with the accompanying drawings in which:
FIG. 1 illustrates the architecture of a network for providing an MBMS service in a mobile communication system;
FIG. 2 is a diagram illustrating a signal flow for initiating an MBMS service in the mobile communication system;
FIG. 3 is a diagram illustrating a signal flow for initiating an MBMS service according to an embodiment of the present invention;
FIG. 4 illustrates transmission of radio channel configuration information for the MBMS service according to an embodiment of the present invention;
FIG. 5 illustrates transmission of radio channel configuration information for the MBMS service according to another embodiment of the present invention;
FIG. 6 is a block diagram of a UE for receiving MBMS control messages according to an embodiment of the present invention;
FIG. 7 is a flowchart illustrating an operation for receiving the MBMS service in the UE illustrated in FIG. 6 according to the second embodiment of the present invention;
FIG. 8 is a block diagram of a UMTS terrestrial radio access network (UTRAN) for transmitting MBMS control messages according to an embodiment of the present invention;
FIG. 9 is a flowchart illustrating an operation for providing the MBMS service in the UTRAN illustrated in FIG. 8 according to the first and second embodiments of the present invention;
FIG. 10 illustrates transmission of radio channel configuration information for the MBMS service according to a third embodiment of the present invention;
FIG. 11 schematically illustrates a layered protocol structure in a UMTS communication system according to an embodiment of the present invention;
FIG. 12 is a flowchart illustrating an operation for receiving the MBMS service in the UE according to the third embodiment of the present invention; and
FIG. 13 is a flowchart illustrating an operation for providing the MBMS service in the UTRAN according to the third embodiment of the present invention.

### DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail.

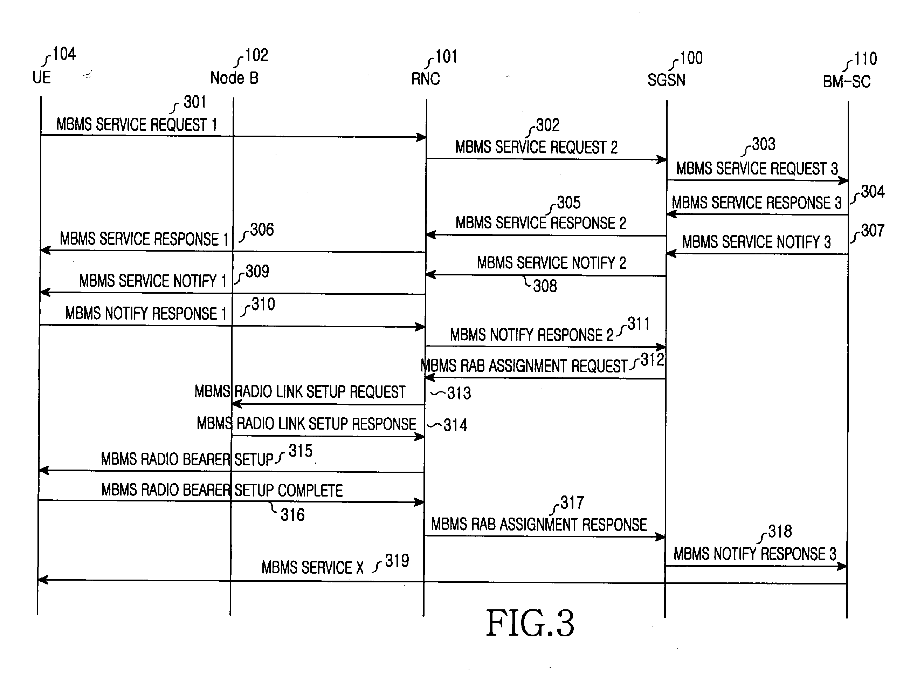

FIG. 3 is a diagram illustrating a signal flow for providing an MBMS service according to the present invention.

Before describing the signal flow, it is to be noted that the MBMS service provision presupposes the mobile communication system configuration illustrated in FIG. 1. Regarding an RNC service context managed in the RNC 101 and an SGSN service context managed in the SGSN 100, the RNC 101 and the SGSN 100 manage MBMS service-related information for each MBMS service, which is collectively termed "service context". The MBMS service-related information contains a list of UEs that are to receive a particular MBMS service (i.e., their IDs), the service areas of the UEs, and quality of service (QoS) required for the MBMS service.

RNC service context={BM-SC service ID, RNC service ID, the IDs of cells and UEs that are to receive or are receiving an MBMS service, and required QoS}

An RNC service context contains service IDs, a plurality of cell IDs, and a plurality of UE IDs. The service IDs are a BM-SC service ID and an RNC service ID. The BM-SC service ID identifies an MBMS service provided by the BM-SC 110 and the RNC service ID identifies an MBMS service provided by the RNC 101. The RNC service ID, perceived by the UE 104 and the RNC 101 only, is assigned for efficiently sensing an MBMS service in a communication path (i.e., a radio bearer) between the RNC 101 and the UE 104, including radio channels.

SGSN service context={BM-SC service ID, SGSN service ID, the IDs of RNCs that are to receive or are receiving an MBMS service, and required QoS}

The SGSN service ID identifies an MBMS service provided by the SGSN 100 to allow the MBMS service to be perceived efficiently between the SGSN 100 and the UE 104. The RNC IDs can be replaced by other information. For example, predetermined RNCs are grouped into one service area and the ID of the service area is used instead of the RNC IDs.

The RNC service context and SGSN service context are continuously updated during the MBMS service. The RNC 101 and the SGSN 100 decide cells (i.e., Node Bs) and RNCs that are to receive MBMS service streams and detect UEs that are receiving or are to receive the MBMS service, using the RNC service context and SGSN service context. The way an MBMS service is provided will be described below in connection with FIG. 3.

Referring to FIG. 3, the UE 104 transmits an MBMS SERVICE REQUEST 1 message to the RNC 101, requesting provision of an MBMS service X in step 301. The MBMS SERVICE REQUEST 1 message contains a BM-SC service ID identifying the MBMS service X and the ID of the UE 104. Upon receipt of the MBMS SERVICE REQUEST 1 message, the RNC 101 updates an existing RNC service context for the MBMS service X by adding the ID of the UE 104 to recipient information and the cell ID of the Node B 102 to which the UE 104 belongs to service area information, and transmits an MBMS SERVICE REQUEST 2 message to the SGSN 100, requesting the provision of the MBMS service X in step 302.

The RNC 101 can update or generate the RNC service context upon receipt of the MBMS SERVICE REQUEST 1 message in step 301, or upon receipt of an MBMS SERVICE RESPONSE 2 message in step 305. While it has been described above that the RNC 101 updates the RNC service context, if the MBMS service X is new, the RNC 101 generates a new RNC service context for the MBMS service X. The MBMS SERVICE REQUEST 2 message contains the BM-SC service ID and the ID of the UE 104. That is, if any other UE is receiving the MBMS service X and thus the RNC service context already exists for the MBMS SERVICE X, radio link control information is transmitted to the UE 104 using the same RNC service ID set in the RNC service context. If the UE 104 is the first to request the MBMS service X, a new RNC service context is formed with an RNC service ID corresponding to the MBMS service X. The RNC 101 may assign RNC service IDs sequentially according to MBMS services, or using a preset function. When the RNC 101 generates the RNC service context depends on system implementation.

Upon receipt of the MBMS SERVICE REQUEST 2 message from the RNC 101, the SGSN 100 updates an existing SGSN service context for the MBMS service X by adding the ID of the UE 104 to recipient information and the ID of the RNC 101 to which the UE 104 belongs to service area information, and transmits an MBMS SERVICE REQUEST 3 message to the BM-SC 110, requesting the provision of the MBMS service X in step 303. If the MBMS service X is new, the SGSN 100 generates a new SGSN service context with a corresponding SGSN service ID assigned to the MBMS service X. This can be carried out upon receipt of an MBMS SERVICE RESPONSE 3 message from the BM-SC 11. The MBMS SERVICE REQUEST 3 message contains the BM-SC service ID. The BM-SC 110 adds the SGSN 100 to an MBMS service X providing list and transmits an MBMS SERVICE RESPONSE 3 to the SGSN 100, notifying normal reception of the MBMS SERVICE REQUEST 3 message in step 304. The MBMS SERVICE RESPONSE 3 message contains the BM-SC service ID.

The SGSN 100 then transmits an MBMS SERVICE RESPONSE 2 message to the RNC 101, notifying normal reception of the MBMS SERVICE REQUEST 2 message in step 305. As stated before, if the MBMS service X is new, the SGSN 100 may assign a corresponding SGSN service ID to the MBMS service X. Upon receipt of the MBMS SERVICE RESPONSE 2 message, the RNC 101 transmits an MBMS SERVICE RESPONSE 1 message to the UE 104, notifying normal reception of the MBMS SERVICE REQUEST 1 message in step 306. As stated before, if the MBMS service X is new, the RNC 101 may assign a corresponding RNC service ID to the MBMS service X. The MBMS SERVICE RESPONSE 1 message contains the BM-SC service ID, the SGSN service ID, and the RNC service ID. The UE 104 stores the SGSN service ID and the RNC service ID and waits.

In step 307, the BM-SC 110 transmits an MBMS SERVICE NOTIFY 3 message to the SGSN 100 to notify that the MBMS service X will start soon and detect the IDs of UEs that are receiving or want to receive the MBMS service X in step 307. The MBMS SERVICE NOTIFY 3 message contains the BM-SC service ID, an action time when the MBMS service X starts, and QoS information. The SGSN 100 establishes a radio bearer over the transmit N/W 111, for providing the MBMS service X, establishes a lu connection for the MBMS service X, and updates the SGSN service context with the QoS and lu connection information. The SGSN 100 then transmits an MBMS SERVICE NOTIFY 2 message to the RNC 101 to notify that the MBMS service X will start soon and detect the list of the UEs that are receiving or want to receive the MBMS service X in step 308. The MBMS SERVICE NOTIFY 2 message contains the BM-SC service ID, the SGSN service ID, the service action time, and the QoS information. Upon receipt of the MBMS SERVICE NOTIFY 2 message, the RNC 101 checks the IDs of the UEs and their cells in the RNC service context and transmits an MBMS SERVICE NOTIFY 1 message to the UE 104, notifying the MBMS service X will start soon in step 309. The MBMS SERVICE NOTIFY 1 message contains the BM-SC service ID, the RNC service ID, the service action time, and the QoS information.

The UE 104 determines whether it has been properly notified to receive the MBMS service X, stores the received QoS information, and transmits an MBMS NOTIFY RESPONSE 1 message to the RNC 101, notifying normal reception of the MBMS SERVICE NOTIFY 1 message in step 310. The MBMS NOTIFY RESPONSE 1 message contains the RNC service ID and the ID of the UE 104. The RNC 101 updates the RNC service context with the IDs of the UE 104 and the Node B 102 and transmits an MBMS NOTIFY RESPONSE 2 message to the SGSN 100, notifying normal reception of the MBMS SERVICE NOTIFY 2 message in step 311. While it is depicted that the RNC 101 receives the MBMS NOTIFY RESPONSE 1 message from the UE 104 only, it can receive this message from a plurality of UEs. In this case, the RNC 101 updates the RNC service context with the IDs of the UEs and their cells.

The MBMS NOTIFY RESPONSE 2 message contains the BM-SC service ID and the ID of the UE 104. Upon receipt of the MBMS NOTIFY RESPONSE 2 message, the SGSN 100 updates the SGSN service context with the UE ID and the RNC ID set in the received message and transmits a radio access bearer (RAB) ASSIGNMENT REQUEST message to the RNC 101 to establish a communication path (i.e., a radio bearer) for transmitting MBMS service X streams in step 312. The RAB ASSIGNMENT REQUEST message contains the BM-SC service ID and the QoS information. The RNC 101 checks the IDs of cells and UEs in the RNC service context, prepares for establishing radio links with the cells according to the QoS information, and broadcasts radio link information to the UEs using the RNC service ID in the RNC service context. In the conventional technology, the radio link information is individually transmitted to the UEs. If the UE 104 is in a Cell_FACH (Forward Access Channel) state, the RNC 101 broadcasts the radio link information on the FACH. On the other hand, if the UE 104 is in a Cell_DCH (Dedicated Channel), the RNC 101 transmits the radio link information to the UE 104 in the conventional manner or requests the UE 104 to transition to the Cell_FACH state for transmission of the radio link information on the FACH. The UE 104 then prepares to establish a radio bearer with the RNC 101. In step 313, the RNC 101 transmits an MBMS RADIO LINK SETUP REQUEST message to the Node B 102, requesting setup of the radio link. The MBMS RADIO LINK SETUP REQUEST message contains information about a channelization code and a scrambling code for the radio link. Upon receipt of the MBMS RADIO LINK SETUP REQUEST message, the Node B 102 establishes the radio link using the channelization and scrambling code information and transmits an MBMS RADIO LINK SETUP RESPONSE message to the RNC 101, notifying the setup of the radio link in step 314.

In step 315, the RNC 101 transmits an MBMS RADIO BEARER SETUP message to the UE 104 within the Node B 102, requesting setup of a radio bearer. The MBMS RADIO BEARER SETUP message contains the RNC service ID, the service action time, and the channelization and scrambling code information. The UE 104 establishes the MBMS radio bearer according to the information and transmits an MBMS RADIO BEARER SETUP COMPLETE message to the RNC 101, notifying completed setup of the MBMS radio bearer in step 316. The MBMS RADIO BEARER SETUP COMPLETE message contains the RNC service ID and the UE ID. Upon receipt of the MBMS RADIO BEARER SETUP COMPLETE message, the RNC 101 updates the RNC service context with the ID of the UE 104 that transmitted the message and transmits an MBMS RAB ASSIGNMENT RESPONSE message to the SGSN 100, notifying completed setup of the communication path for the MBMS service X in step 317. The MBMS RAB ASSIGNMENT RESPONSE message contains the BM-SC service ID and the IDs of UEs that have transmitted the MBMS RADIO BEARER SETUP COMPLETE message. The SGSN 100 updates the SGSN service context with the UE IDs included in the received message and transmits an MBMS NOTIFY RESPONSE 3 message containing an internet protocol (IP) multicast address to the BM-SC 110, notifying completed preparation for the MBMS service X in step 318. The BM-SC 110 then provides streams for the MBMS service X to the UE 104 in step 319.

Table 1 and Table 2 below list the messages and the operations of each entity for initiating the MBMS service X. For ease of understanding, the messages are named as illustrated in the tables, but the names can be changed to suit system needs.

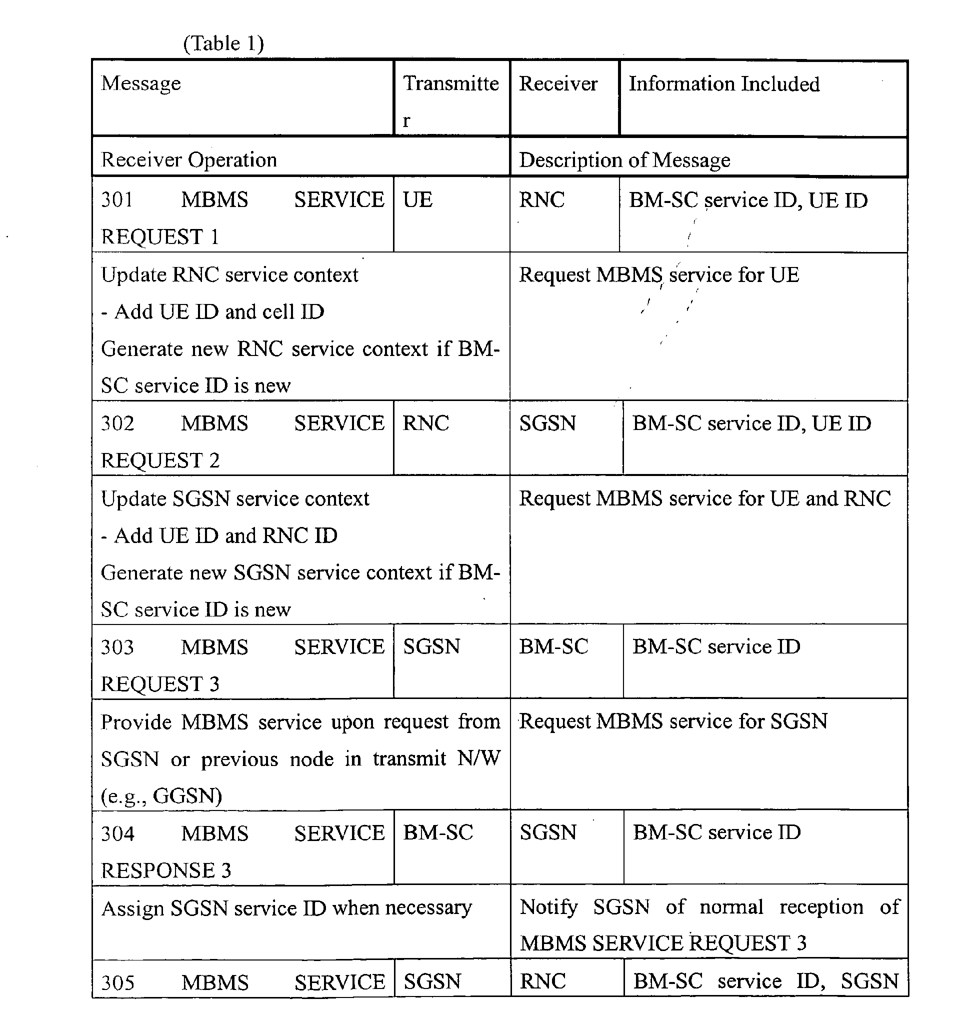

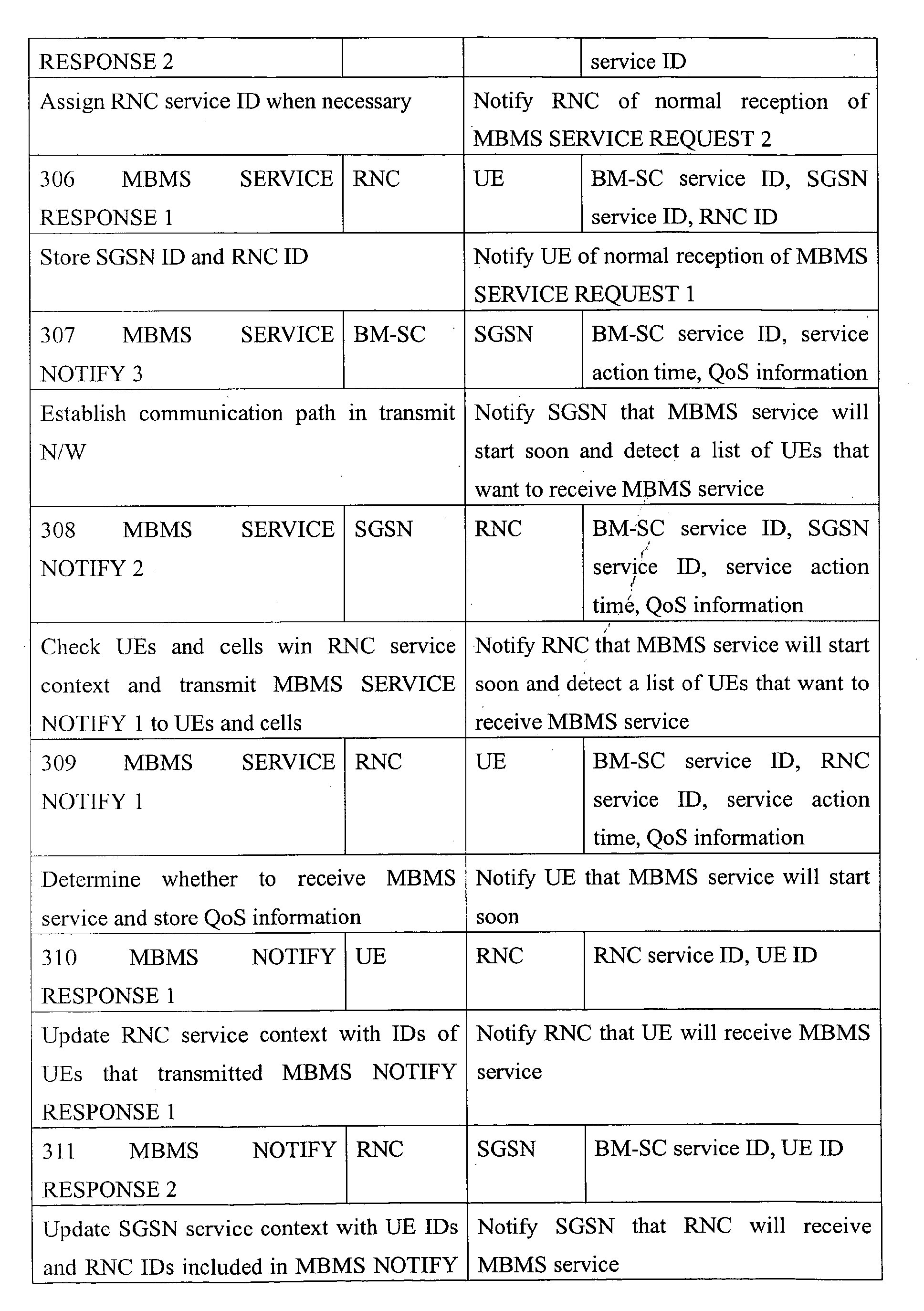

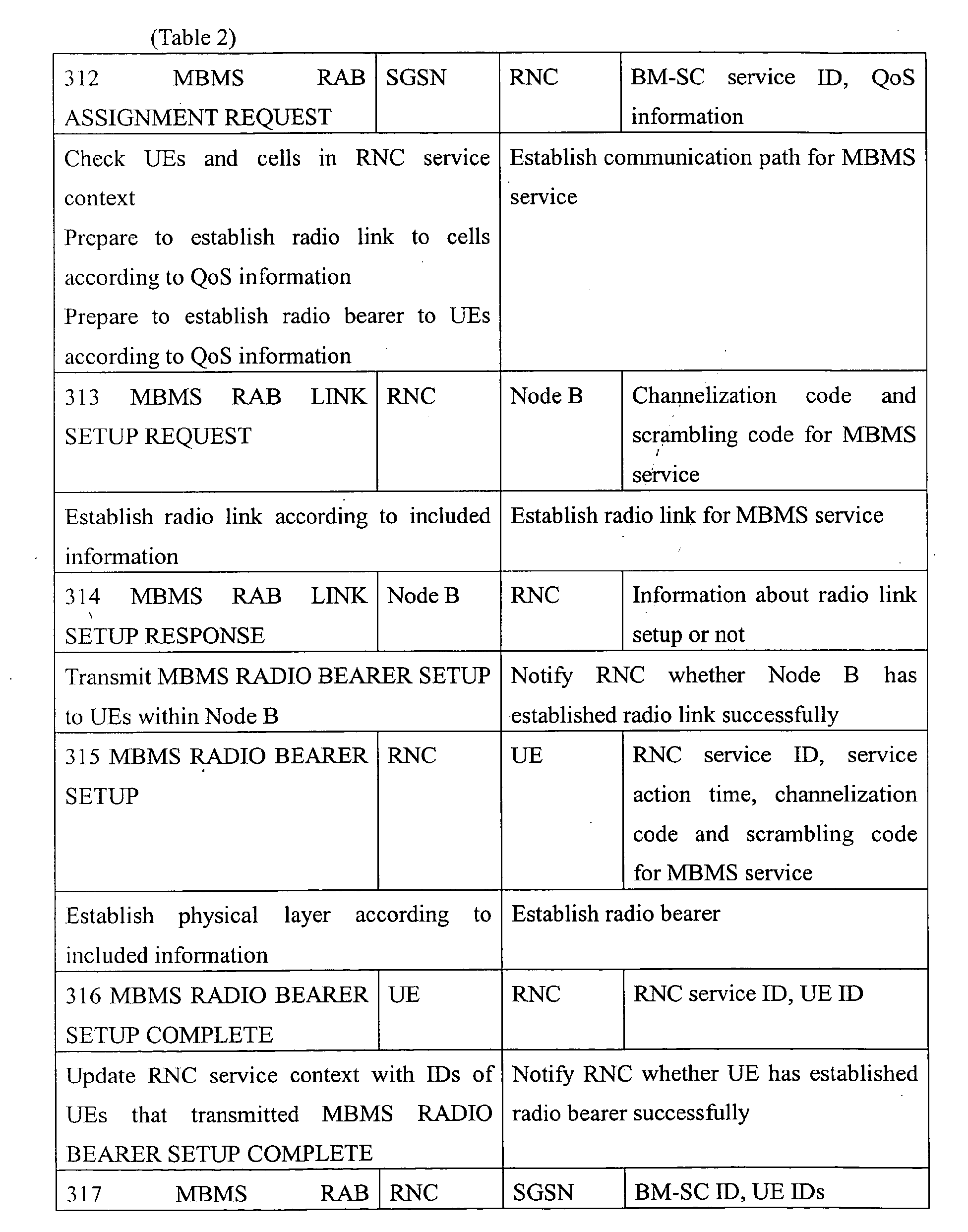

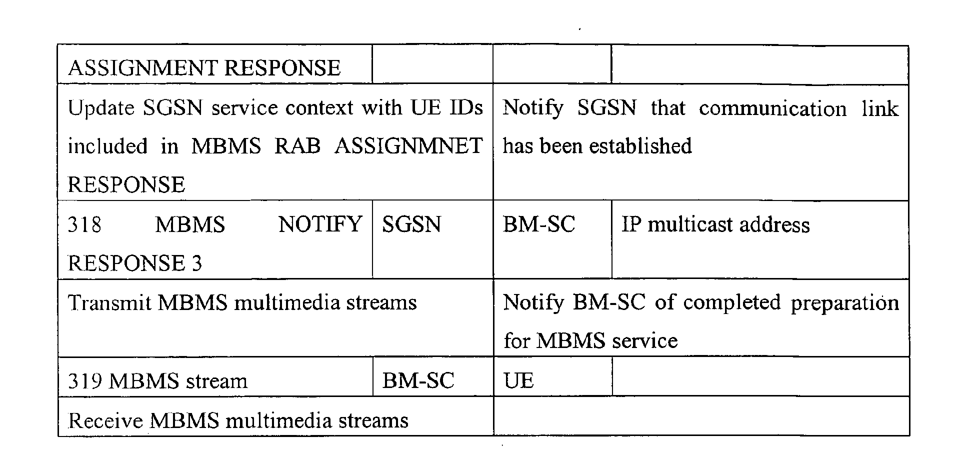

Among the above messages, MBMS RAB ASSIGNMENT, MBMS RAB ASIGNMENT RESPONSE, MBMS RADIO LINK SETUP REQUEST, MBMS RADIO LINK SETUP RESPONSE, MBMS RADIO BEARER SETUP, and MBMS RADIO BEARER SETUP COMPLETE are newly defined or modified from RAB ASSIGNMENT REQUEST, RAB ASSIGNMENT RESPONSE, RADIO LINK SETUP REQUEST, RADIO LINK SETUP RESPONSE, RADIO BEARER SETUP, and RADIO BEARER SETUP COMPLETE as defined in the UMTS standards. Needless to say, the messages contain information about the MBMS service.

If a plurality of UEs want to receive the MBMS service, radio channel configuration information required to receive MBMS service streams, such as channelization and scrambling codes, is transmitted to them by the MBMS RADIO BEARER SETUP message(s). The radio channel configuration information can be transmitted to the individual UEs by as many MBMS RADIO BEARER SETUP messages according to the conventional method (point to point), or it can be broadcast to the UEs by a single MBMS RADIO BEARER SETUP message according to the present invention (point to multipoint).

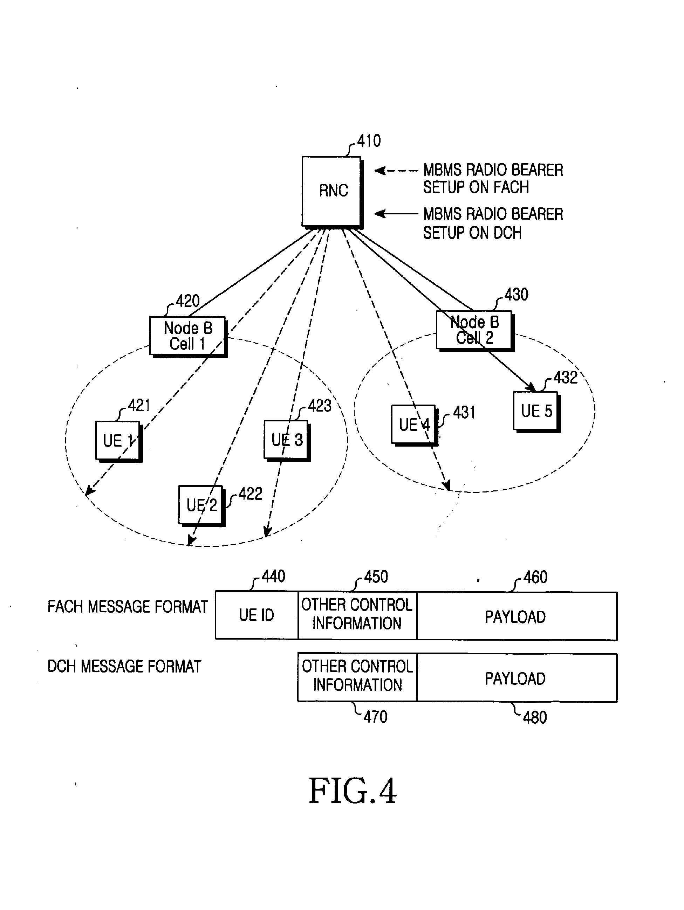

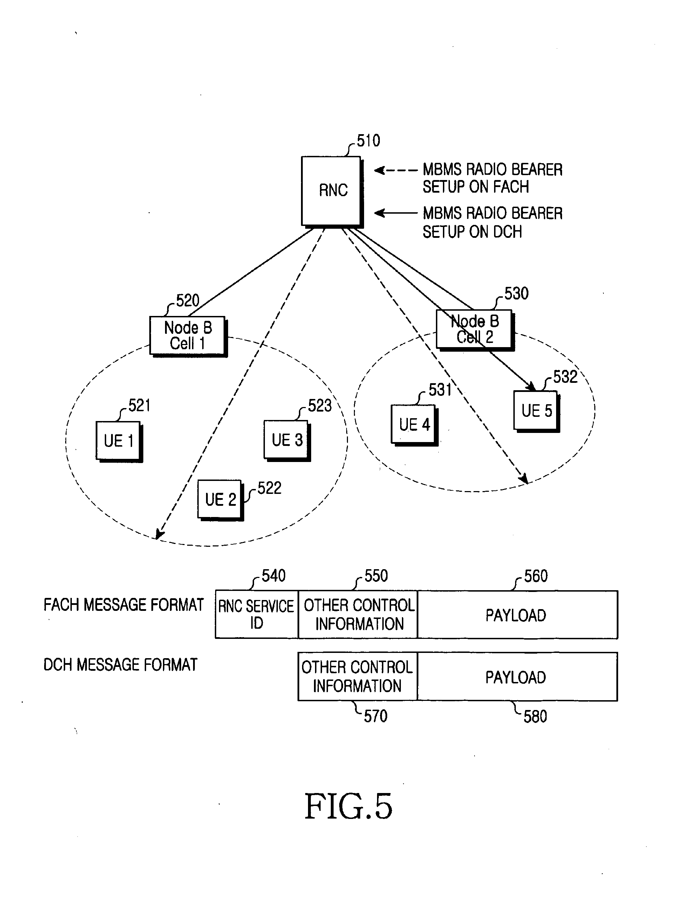

With reference to FIGs. 4 and 5, broadcasting of radio channel configuration information to a plurality of UEs by a single control message will be described below.

FIG. 4 schematically illustrates transmission of radio channel configuration information for an MBMS service according to an embodiment of the present invention.

It is assumed herein that UE1 421, UE2 422, UE3 423, UE4 431, and UE5 432 have requested a first MBMS service and MBMS radio links have been completely set up for the UEs though steps 301 to 314 in FIG. 3, UE1 421, UE2 422, UE3 423, and UE4 431 have FACH and random access channel (RACH) information, UE1 421, UE2 422, UE3 423, UE4 431 are in a Cell_FACH state, and UE5 432 is in a Cell_DCH state.

Referring to FIG. 4, an RNC 410 broadcasts the MBMS RADIO BEARER SET UP message to UE1 421, UE2 422, UE3 423, and UE4 431 on FACHs established for Node Bs 420 and 430, transmitting the same message to UE5 432 on a DCH. UE1 421 to UE5 432 transmit the MBMS RADIO BEARER SETUP COMPLETE message to the RNC 410 in response to the MBMS RADIO BEARER SET UP message. In an illustrated FACH format, the IDs of UEs that are to receive the FACH message are set in UE ID 440 since an FACH is shared among the UEs. At initial system access, each UE is assigned a 16 or 32-bit ID. Control information other than the UE ID information, for example, multiplex information, is set in Other Control Information 450, and information included in the MBMS RADIO BEARER SETUP message exists in Payload 460.

Since a DCH is dedicated to a particular UE, the MBMS RADIO BEARER SETUP message of the DCH is comprised of Other Control Information 470 and Payload 480, without a UE ID. Dotted lines indicating FACH coverage run to cell boundaries because the FACH is transmitted up to the cell boundaries, whereas a solid line indicating transmission of the DCH is confined to UE5 432 since the DCH reaches UE5 432 only through transmission power control.

FIG. 5 schematically illustrates transmission of radio channel configuration information for the MBMS service according to another embodiment of the present invention.

It is assumed herein that UE1 521, UE2 522, UE3 523, UE4 531, and UE5 532 have requested the first MBMS service and MBMS radio links have been completely set up for the UEs though steps 301 to 314 in FIG. 3, UE1 521, UE2 522, UE3 523, and UE4 531 have FACH and RACH information, UE1 521, UE2 522, UE3 523, and UE4 531 are in a Cell_FACH state, and UE5 532 is in a Cell_DCH state.

Referring to FIG. 5, an RNC 510 broadcasts the MBMS RADIO BEARER SET UP message to UE1 521, UE2 522, and UE3 523 in the same cell on an FACH formatted as illustrated. Since the FACH is shared among the UEs, an RNC service ID is set in RNC ID 540 to identify an MBMS service which the MBMS RADIO BEARER SETUP message is about, instead of the IDs of the UEs. The transmission of the RNC service ID prevents unnecessary consumption of radio resources that might be caused when the MBMS RADIO BEARER SETUP message is transmitted individually to each UE. If a UE that wants to receive the MBMS service is in the Cell_DCH state, the RNC 510 may request the UE to transition to the Cell_FACH state and receive radio channel configuration information for the MBMS service on an FACH. The RNC service ID is sequentially assigned according to the type of the MBMS service, or by a preset function. The RNC 510 sets the RNC service ID 540 according to the MBMS SERVICE REQUEST 1 and broadcasts it to the UEs by the MBMS SERVICE RESPONSE 1 message. Other Control Information 550 provides control information other than the RNC service ID and Payload 560 contains information specific to the MBMS RADIO BEARER SETUP message. Since UE4 531 is also in the Cell_FACH state, the RNC 510 transmits the MBMS RADIO BEARER SETUP message to UE4 531 on a corresponding FACH. The RNC 510 transmits the MBMS RADIO BEARER SETUP message to UE5 532 on a DCH because it is in the Cell_DCH state.

Since the DCH is dedicated to a particular UE, the MBMS RADIO BEARER SETUP message of the DCH is comprised of Other control information 570 and Payload 580 that provides information specific to the message, without an RNC service ID. Dotted lines indicating FACH coverage run to cell boundaries because the FACH is transmitted up to the cell boundaries, whereas a solid line indicating transmission of the DCH is confined to UE5 532 since the DCH reaches UE5 532 only through transmission power control.

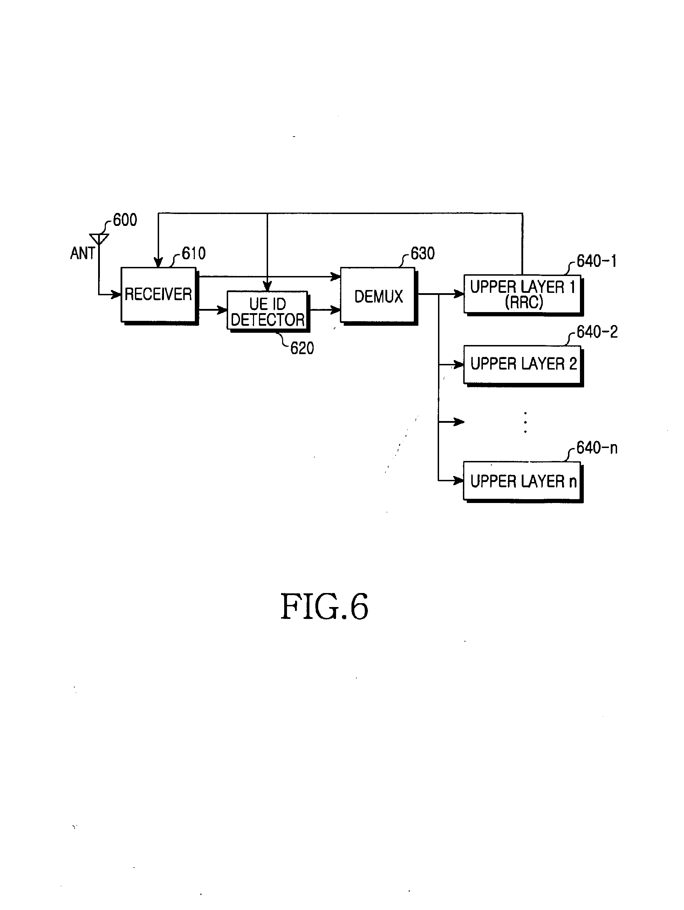

FIG. 6 is a block diagram of a UE for receiving the MBMS RADIO BEARER SETUP message according to the present invention.

Referring to FIG. 6, upon receipt of a radio frequency (RF) signal from an antenna (ANT) 600, a receiver 610 detects a channelization code for the RF signal under the control of upper layers, for example, radio resource control (RRC) layers 640-1 to 640-n. The receiver 610 then despreads the RF signal with the channelization code, processes it as an MBMS RADIO BEARER SETUP message after segmentation and cyclic redundancy check (CRC), and provides the MBMS RADIO BEARER SETUP message to a UE ID detector 620 or directly to a demultiplexer (DEMUR) 630. If the UE is in a Cell_FACH state, the RRC layer 640-1 controls the receiver 610 to receive an FACH signal, and if the UE is in a Cell_DCH state, it controls the receiver 610 to receive a DCH signal. Specifically, in the Cell_FACH state, the receiver 610 transmits the processed MBMS RADIO BEARER SETUP message to the UE ID detector 620 to decide whether the FACH message is destined for the UE. On the other hand, in the Cell_DCH state, the receiver 610 transmits the processed MBMS RADIO BEARER SETUP message directly to the DEMUX 630 since the DCH is dedicated to the UE.

In accordance with the first embodiment depicted in FIG. 4, the UE ID detector 620, knowing the ID of the UE, compares UE IDs included in the UE ID 440 of the MBMS RADIO BEARER SETUP message with the ID of the UE. Only if there is any identical UE ID, the UE ID detector 620 outputs the MBMS RADIO BEARER SETUP message to the DEMUR 630.

In accordance with the second embodiment depicted in FIG. 5, the UE ID detector 620, knowing an RNC service ID identifying a requested MBMS service, compares the RNC service ID with the RNC service ID 540 of the MBMS RADIO BEARER SETUP message. Only if they are identical, the UE ID detector 620 outputs the MBMS RADIO BEARER SETUP message to the DEMUR 630. That is, the UE ID detector 620 decides whether the received MBMS RADIO BEARER SETUP message is destined for the UE using the UE ID or the RNC service ID.

The DEMUR 630 processes the Payload 460 or 480 of the MBMS RADIO BEARER SETUP message using Other Control Information 450 or 470 according to whether it has been received on an FACH or DCH in accordance with the first embodiment of the present invention. On the other hand, the DEMUR 630 processes the Payload 560 or 580 of the MBMS RADIO BEARER SETUP message using Other Control Information 550 or 570 according to whether it has been received on an FACH or DCH in accordance with the second embodiment of the present invention. The DEMUX 630 then provides the processed MBMS RADIO BEARER SETUP message to a corresponding upper layer.

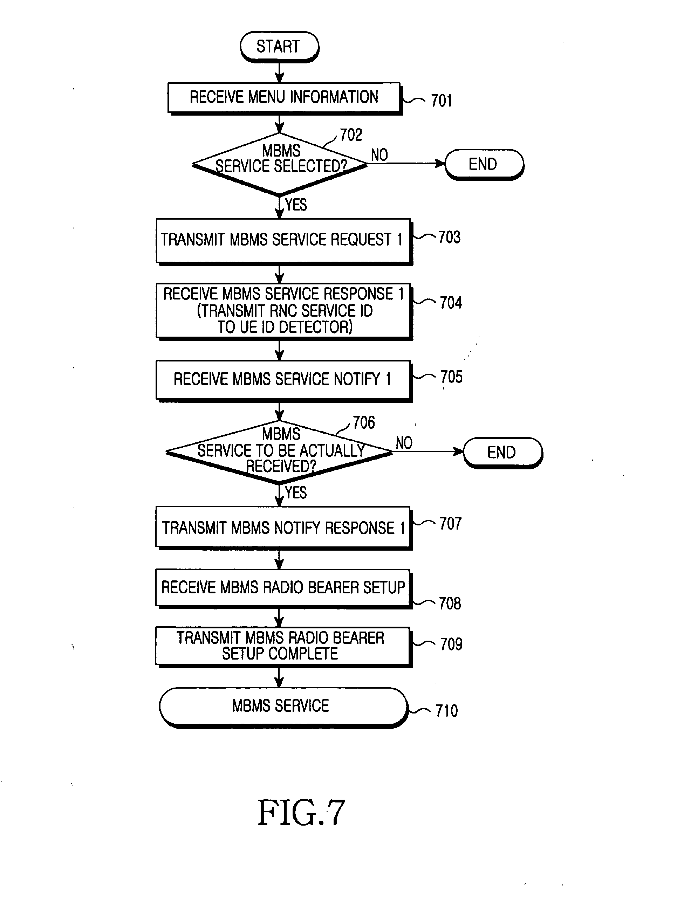

FIG. 7 is a flowchart illustrating an operation for an MBMS service in the UE according to the second embodiment of the present invention. Referring to FIG. 7, if the UE receives menu information in step 701 and selects a particular MBMS service in step 702, it transmits an MBMS SERVICE REQUEST 1 message to an RNC in step 703. The MBMS SERVICE REQUEST 1 message contains a BM-SC service ID identifying the selected MBMS service. In step 704, the UE monitors an FACH if it is in a Cell_FACH state, and a DCH if it is in a Cell_DCH state. Upon receipt of an MBMS SERVICE RESPONSE 1 message, the receiver 610 transmits an RNC service ID included in the received message to the UE ID detector 620. According to the RNC service ID, the UE configures a channel on which to receive the MBMS service. Upon receipt of an MBMS SERVICE NOTIFY 1 message on the FACH or DCH in step 705, the UE detects service IDs from the received message and decides whether to receive the MBMS service in step 706. The MBMS SERVICE NOTIFY 1 message contains the BM-SC service ID and the RNC service ID. If the UE decides to receive the MBMS service corresponding to the service IDs, it transmits an MBMS SERVICE NOTIFY RESPONSE 1 message to the RNC in step 707. Upon receipt of an MBMS RADIO BEARER SETUP message on the FACH or DCH, the UE sets up a radio bearer to receive streams for the MBMS service according to radio channel configuration information included in the received message, and stores a service action time included in the message to control the receiver 610 for reception of the MBMS data at the action time in step 708. In the Cell_FACH state, the MBMS RADIO BEARER SETUP message contains the RNC service ID and the UE ID detector 620 decides whether the received MBMS RADIO BEARER SETUP message is destined for the UE according to the RNC service ID. If the MBMS RADIO BEARER SETUP message is for the UE, the UE sets up the radio bearer. The UE then transmits an MBMS RADIO BEARER SETUP COMPLETE message to the RNC in step 709 and starts to receive the MBMS data at the action time via the radio bearer in step 710.

While FIG. 7 has been described in accordance with the second embodiment of the present invention, the same procedure applies to the first embodiment by replacing the RNC service ID with a UE ID.

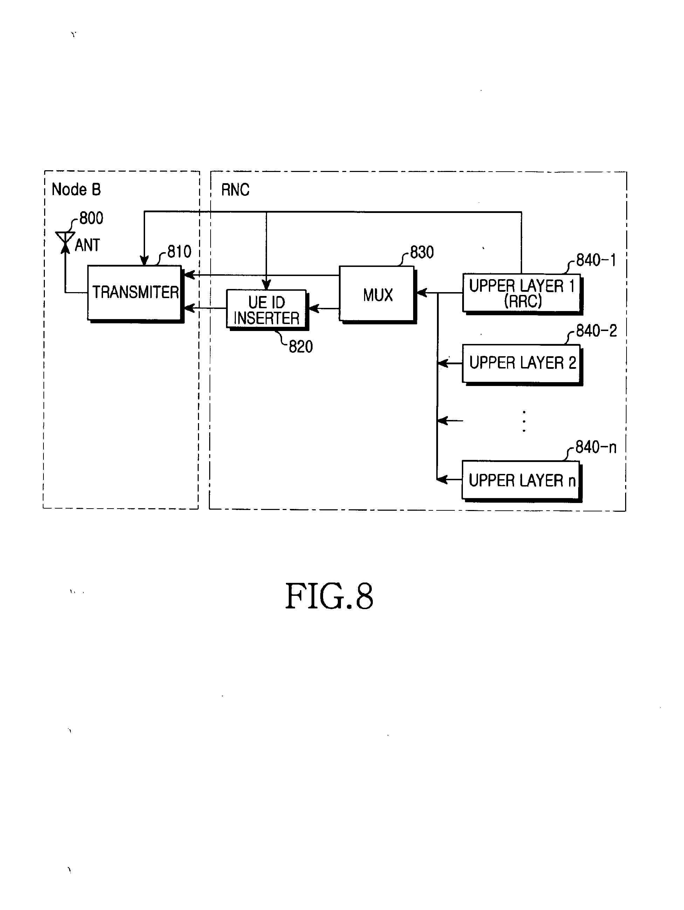

FIG. 8 is a block diagram of a UTRAN for providing an MBMS service according to the present invention. The UTRAN generically refers to both a Node B and an RNC.

Referring to FIG. 8, upon receipt of an MBMS SERVICE RESPONSE 2 message, the RNC applies an RNC service ID identifying the MBMS service to the input of a UE ID inserter 820. Upper layers (RRC layers) 840-1 to 840-n, if there is data to transmit, provides the transmission data to a multiplexer (MUX) 830. While not shown, particular elements can be disposed between the upper layers 840-1 to 840-n and the MUX 830, for segmenting data received from the upper layers 840-1 to 840-n and assigning serial numbers to the data segments. The MUX 830 multiplexes the received data with multiplex information. If the multipliexed signal is to be transmitted on a DCH, the MUX 830 outputs it to a transmitter 810, and if it is to be transmitted on an FACH, the MUX 830 outputs it to the UE ID inserter 820. The UE ID inserter 820 inserts UE IDs or the RNC ID to the multiplexed signal according to the multiplex information or under the control of the upper layers 840-1 to 840-n. For example, if the multiplex information is 0 or 1, the RNC service ID is inserted and if the multiplex information is any other value, the UE IDs are inserted. Alternatively, if the UE ID inserter receives data requiring the RNC service ID, it inserts the RNC service ID under the control of the upper layers 840-1 to 840-n. The transmitter 810 transmits data received from the UE ID inserter 820 or the MUX 830 by an RF signal through an antenna (ANT) 800.

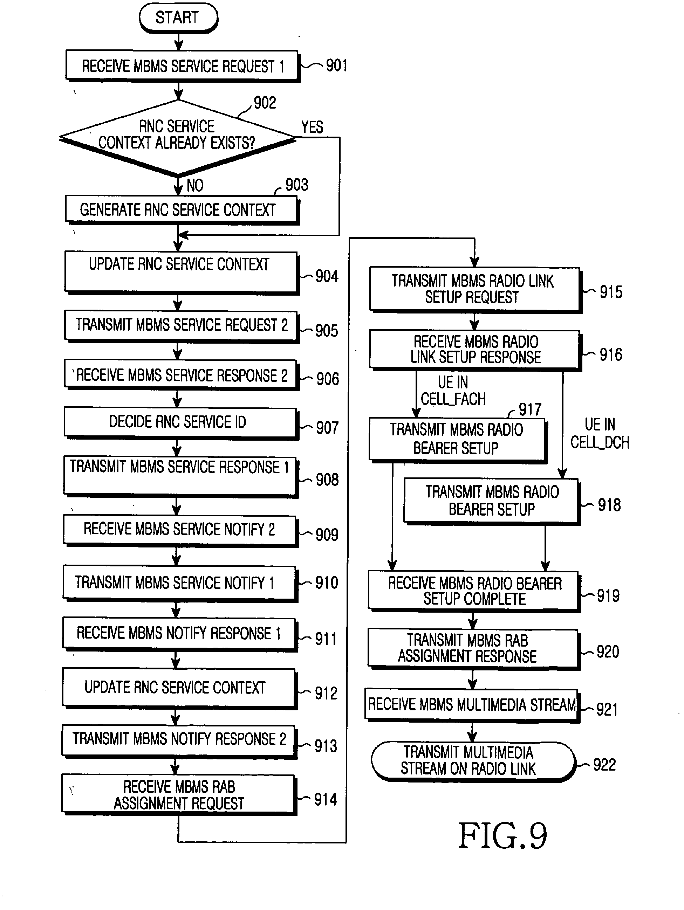

FIG. 9 is a flowchart illustrating an operation for providing an MBMS service in the UTRAN illustrated in FIG. 8 according to an embodiment of the present invention.

Referring to FIG. 9, upon receipt of an MBMS SERVICE REQUEST 1 message in step 901, the RNC determines whether an RNC service context exists for a BM-SC service ID set in the received message in step 902 In the absence of the RNC service context, the RNC generates a new RNC service context corresponding to the BM-SC service ID in step 903 and proceeds to step 904. On the other hand, in the presence of the RNC service context, the RNC updates the RNC service context with the ID of a UE that transmitted the message and the ID of its cell in step 904.

In step 905, the RNC transmits an MBMS SERVICE REQUEST 2 message containing the UE ID to the SGSN. The SGSN then finds out the UE and the RNC that want to receive the MBMS service from the MBMS SERVICE REQUEST 2 message. The RNC receives an MBMS SERVICE RESPONSE 2 message from the SGSN in response to the MBMS SERVICE REQUEST 2 message in step 906, and the UE ID inserter 820 receives an RNC service ID corresponding to the MBMS service in step 907. If the MBMS service is new, the RNC assigns a corresponding RNC service ID and if the RNC service context already exists for the MBMS service, it contains the RNC service ID.

The RNC transmits an MBMS SERVICE RESPONSE 1 message containing the RNC service ID to the UE in step 908 and receives an MBMS SERVICE NOTIFY 2 message from the SGSN in step 909. In step 910, the RNC transmits an MBMS SERVICE NOTIFY 1 message to UEs with IDs registered in the RNC service context. The RNC receives an MBMS SERVICE NOTIFY RESPONSE 1 message from UEs in step 911 and updates the RNC service context with the IDs of the UEs that transmitted the MBMS SERVICE NOTIFY RESPONSE 1 message and the IDs of their cells in step 912. The RNC transmits an MBMS SERVICE NOTIFY RESPONSE 2 message to the SGSN in step 913 and receives an MBMS RAB ASSIGNMENT REQUEST message from the SGSN in step 914.

In step 915, the RNC prepares for radio channel setup based on QoS information included in the MBMS RAB ASSIGNMENT REQUEST message. Specifically, the RNC transmits an MBMS RADIO LINK SETUP REQUEST message to Node Bs that take charge of the UEs registered in the RNC service context. The MBMS RADIO LINK SETUP REQUEST message contains information about the configurations of radio channels that will deliver MBMS data. The Node Bs control their transmitters 810 based on the radio channel configuration information and transmit an MBMS RADIO LINK SETUP RESPONSE message to the RNC. Upon receipt of the MBMS RADIO LINK SETUP RESPONSE message in step 916, the RNC transmits an MBMS RADIO BEARER SETUP message to UEs in a Cell_FACH state on an FACH in step 917 while the RNC transmits an MBMS RADIO BEARER SETUP message to UEs in a Cell_DCH state on a DCH in step 918. From the view of the RNC, there are UEs which are in the state of Cell_FACH and/or Cell_DCH. The RNC selects contents of the MBMS RADIO BEARER SETUP message according to the UE state and transmits the MBMS RADIO BEARER SETUP message to the corresponding UE.
In step 919, the RNC receives MBMS RADIO BEARER SETUP COMPLETE messages from the UEs. The RNC notifies the SGSN that the radio channel setup for the MBMS service has been completed in step 920 and transmits MBMS streams to the UEs via the established radio channels in step 921.

Besides the FACH and the DCH, the MBMS RADIO BEARER SETUP message can be transmitted to UEs on a common control channel (CCCH) in a third embodiment of the present invention.

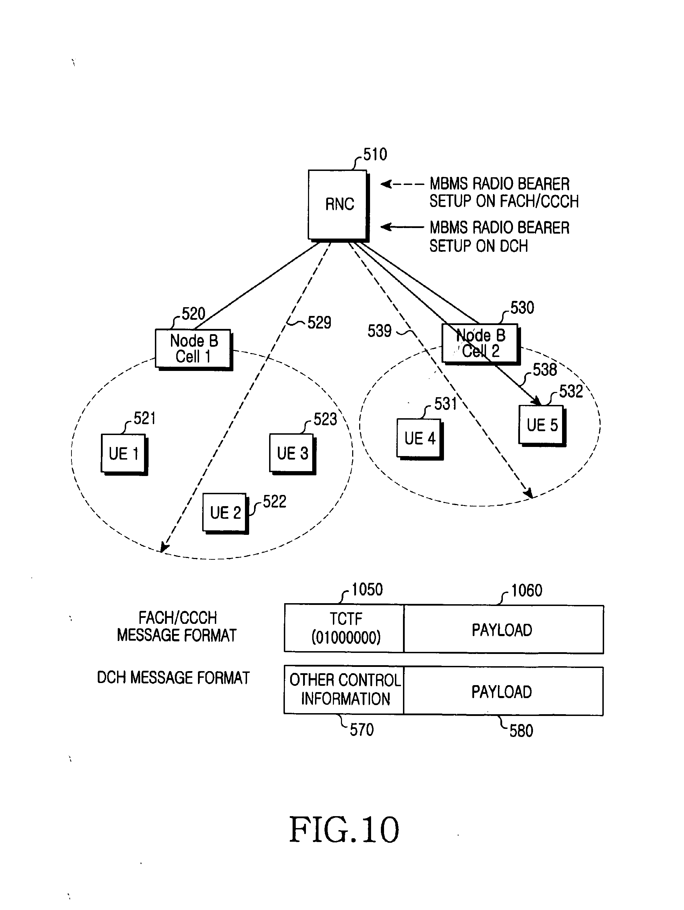

FIG. 10 schematically illustrates transmission of radio channel configuration information for an MBMS service on a CCCH according to the third embodiment of the present invention.

The same situation as depicted in FIG. 5 is presupposed herein. That is, UE1 521, UE2 522, UE3 523, UE4 531, and UE5 532 have requested the first MBMS service and MBMS radio links have been completely set up for the UEs though steps 301 to 314 in FIG. 3, UE1 521, UE2 522, UE3 523, and UE4 531 have FACH and RACH information, UE1 521, UE2 522, UE3 523, and UE4 531 are in a Cell_FACH state, and UE5 532 is in a Cell_DCH state.

Referring to FIG. 10, the RNC 510 broadcasts the MBMS RADIO BEARER SETUP message to UE1 521, UE2 522, and UE3 523 in the same cell on an FACH/CCCH formatted as illustrated. In the CCCH format, the MBMS RADIO BEARER SETUP message has UE IDs in Payload 1060. Thus, the UEs in the Cell_FACH state receive the MBMS RADIO BEARER SETUP message on the CCCH and transmit the received message directly to their RRC layers. The RRC layers determine whether the received message is destined for the UEs. In accordance with the third embodiment of the present invention, the CCCH delivers common control information such as the MBMS RADIO BEARER SETUP message to a plurality of UEs. The common control information uses an MBMS-radio network temporary identifier (M-RNTI) as a UE ID.

UE4 531 is in the Cell_FACH state and UE5 532 is in the Cell_DCH state within Node B2 530. Control messages are transmitted to the UE 531 on an FACH/CCCH 539 and to the UE 532 on a DCH 538. The UE 531 processes all transport blocks (TBs) received on the FACH and transmits them to its MAC layer, and the MAC layer decides whether to transmit the received TBs to the UE ID detector 620 or a radio link control (RLC) layer connected to an RRC according to a target channel type fields (TCTFs) 1050 in the headers of the TBs. The TCTF 1050 is attached to each TB transmitted on the FACH and provides information indicating the channel type of the TB. For example, if the TCTF 1050 is 11, the TB is from a dedicated traffic channel (DTCH) or a dedicated control channel (DCCH). Payload 1060 following the TCTF 1050 contains UE ID information and multiplex information. Hence, it follows that a TCTF 11 is actually attached before Other Control Information 470 and 570 in the DCH message formats of the first and second embodiments, while not shown.

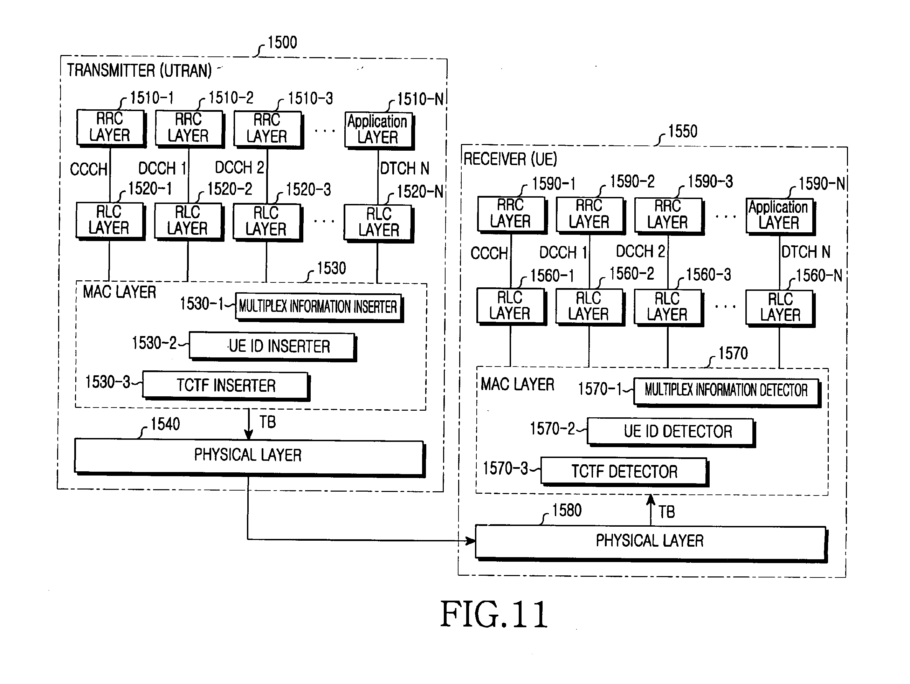

If the TCTF 1050 is 01000000, the received TBs are from the CCCH. Hence, the receiving MAC layer transmits the TBs to the RLC layer connected to the RRC layer. The RRC layer decides whether the TBs are destined for the UE by interpreting UE IDs included in the Payload 1060 of the TBs. Protocol stacks in the UE and the UTRAN will be described with reference to FIG. 11.

FIG. 11 illustrates protocol stacks in the UMTS communication system according to the present invention. Although a UTRAN and a UE are designated as a transmitter 1500 and a receiver 1550, respectively (i.e., downlink communication), the protocol stacks apply to both downlink and uplink transmissions.

Referring to FIG. 11, after the UE 1550 is initially power-on, a CCCH, a DCCH, and a DTCH are established between the UE 1550 and the UTRAN 1500 by an RRC CONNECTION SETUP procedure. The CCCH and DCCH deliver RRC messages and the DTCH delivers user data between the UE 1550 and the UTRAN 1500. Only one CCCH is connected between the UTRAN 1500 and the UE 1550, while a plurality of DCCHs and a plurality of DTCHs can be connected between them. The DCCH, DTCH and CCCH are termed logical channels. One or two RLC layers can be configured on one logical channel. For clarity of description, it is assumed that one RLC layer is configured on one logical channel. UTRAN RLC layers 1520-1 to 1520-N segment data received from their upper layers, i.e. RRC layers 1510-1 to 1510-3 and an application layer 1510-N to an appropriate size and attaches additional information such as serial numbers to the data segments.

UE RLC layers 1560-1 to 1560-N assemble data segments received from a MAC layer 1570 referring to their serial numbers and transmit the assembled data to their upper layers, i.e., RRC layers 1590-1 to 1590-3 and an application layer 1590-N. Meanwhile, the UTRAN MAC layer 1530 inserts multiplex information. Specifically, a multiplex information inserter 1530-1 inserts the ID of a corresponding logical channel to the DTCH or DCCH, excluding the CCCH. Hence, a multiplex information detector 1570-1 in the UE MAC layer 1570 interprets the logical channel ID inserted by the multiplex information inserter 1530-1 and transmits received data to a corresponding RLC layer according to the logical channel ID.
A UE ID inserter 1530-2 in the UTRAN MAC layer 1530 inserts the ID of a receiver ID into data received from the multiplex information inserter 1530-1. The UE ID inserter 1530-2 inserts a different receiver ID according to the embodiments of the present invention, that is, a UE ID in the first embodiment, and an RNC service ID in the second embodiment. In the third embodiment, the RRC layer inserts the RNC service ID. As described above, while the multiplex information inserter 1530-1 inserts multiplex information in the first and second embodiments, it is inoperative in the third embodiment because the CCCH is free of multiplex information. Yet, a TCTF inserter 1530-3 inserts a TCTF field commonly in the first to third embodiments. Accordingly, the UE MAC layer 1570 identifies a UE that is to receive an MBMS service by interpreting an inserted UE ID or RNC service ID in the first and second embodiments, whereas the UE RRC layers 1590-1 to 1590-N-1 interpret the RNC service ID in the third embodiment. More specifically, the UE ID detector 1570-2 in the MAC layer 1570 checks whether the UE ID or RNC service ID of data received from a physical layer 1580 or a TCTF detector 1570-3 is identical to the ID of the UE or the RNC service ID of a requested MBMS service. If they are identical, the UE ID detector 1570-2 transmits the UE ID or RNC service ID of the data to the multiplex information detector 1570-1.

The TCTF inserter 1530-3 in the UTRAN MAC layer 1530 inserts a TCTF into data received from the RLC layer 1520-1 or the UE ID inserter 1530-2. If the data is to be delivered on the CCCH, it is directly input to the TCTF inserter 1530-3 without passing the multiplex information inserter 1530-1 and the UE ID inserter 1530-2. The TCTF inserter 1530-3 attaches a coded TCTF, 01000000 to the CCCH data, while it attaches a coded TCTF, 11 to the DCCH or DTCH data. Thus, the TCTF detector 1570-3 in the UE MAC layer 1570, if the first two bits of data received from the physical layer 1580 are 01, removes the two and following six bits, i.e., 01000000 and transmits the resulting data to the RLC layer 1590-1 connected to the CCCH. If the first two bits are 11, the TCTF detector 1570-3 removes 11 and transmits the resulting data to the UE ID detector 1570-2.

The TCTF detector 1570-3, the TCTF inserter 1530-3, the UE ID detector 1570-2, and the UE ID inserter 1530-2 are enabled only for logical channels on the FACH. If a DTCH x is delivered on a dedicated physical channel (DPCH), the above elements are disabled for the logical channel DTCH x. As described before, a TB is the data unit transmitted from an RLC layer to the MAC layer after segmentation and attachment of additional information. If the RLC layer segments 50-bit data received from an upper layer, for example, an RRC layer to five 100-bit data and 16-bit RLC additional information and 8-bit MAC additional information are attached to each 100-bit data, the MAC layer transmits five 124-bit data to the physical layer. Each 124-bit data is a TB.

A more detailed description of the third embodiment of the present invention will be given below with reference to FIG. 11.

Referring to FIG. 11, the UTRAN 1500, if it wants to transmit common information about an MBMS service, generates a common message such as an MBMS RADIO BEARER SETUP message or an MBMS RADIO BEARER RELEASE message. The MBMS RADIO BEARER SETUP or MBMS RADIO BEARER RELEASE message contains an RNC service ID instead of UE IDs. Because the message is delivered on a CCCH, it is transmitted to the RLC layer 1520-1. The RLC layer 1520-1 segments data included in the message to a predetermined size and, for the same reason, provides the data segments directly to the TCTF inserter 1530-3 in the MAC layer 1530.

The TCTF inserter 1530-3 inserts a TCTF of 01000000 to the received data and transmits the resulting message to the physical layers 1540 of cells with UEs in the Cell_FACH state. The TCTF inserter 1530-3 operates in the same manner in the first to third embodiments of the present invention. In other words, the TCTF inserter 1530-3 outputs TBs. Each of the physical layers 1540 transmits the message on an FACH after channel coding, spreading, and modulation of the TBs. The physical layer 1580 of the UE 1550 in the Cell_FACH state transmits the received TBs to the MAC layer 1570. The MAC layer 1570 then outputs the TBs to the TCTF detector 1570-3. The TCTF detector 1570-3 interprets the TCTF of the TBs and, if the TCTF is 01000000, transmits the TBs to the RLC layer 1560-1 because the TBs are from the CCCH.

The RLC layer 1560-1 assembles the TBs using additional information including their serial numbers to the MBMS RADIO BEARER SETUP or MBMS RADIO BERER RELEASE message and provides the message to the RRC layer 1590-1. The RRC layer 1590-1 checks the RNC service ID of the message because the message has been received on the CCCH. The RRC layer 1590-1 compares the RNC service ID with an RNC service ID received in step 306 of FIG. 3. If they are identical, the RRC layer 1590-1 operates in a different manner for the MBMS RADIO BEARER SETUP or MBMS RADIO BERER RELEASE message. In the case of the MBMS RADIO BEARER SETUP message, the RRC layer 1590-1 establishes a corresponding physical channel using included MBMS radio channel configuration information by configuring a despreader, a demodulator, and a channel decoder with a spreading code, a modulation scheme, and channel coding parameters for the MBMS channel. In the case of the MBMS RADIO BEARER RELEASE message, the RRC layer 1590-1 commands the physical layer 1580 to discontinue reception of the MBMS channel.

The MBMS RADIO BEARER SETUP or MBMS RADIO BEARER RELEASE message can include the following information.
1. Message type: preset to an integer value;
2. UE ID: identifies a UE to receive the message. Instead of a UE ID, an RNC service ID is used in the third embodiment of the present invention. This information is a 16 or 32-bit stream; and
3. Other Control Information: includes information corresponding to the message type. The MBMS RADIO BEARER SETUP message can contain information associated with an MBMS channel and the MBMS RADIO BEARER RELEASE message can contain time to discontinue an MBMS service.

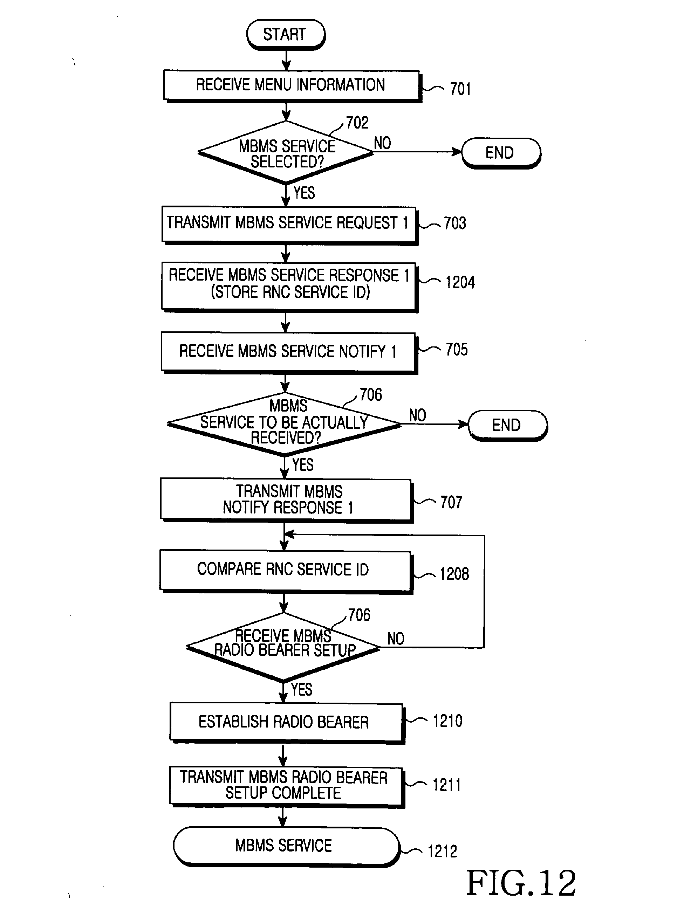

With reference to FIG. 12, the operation of the UE in the third embodiment of the present invention will be described.

FIG. 12 is a flowchart illustrating a UE operation, particularly related to reception of the MBMS RADIO BEARER SETUP message for an MBMS service in the third embodiment of the present invention. Like reference numerals denote the same steps as illustrated in FIG. 7.

Referring to FIG. 12, if the UE receives menu information in step 701 and selects a particular MBMS service in step 702, it transmits an MBMS SERVICE REQUEST 1 message to the RNC in step 703. The MBMS SERVICE REQUEST 1 message contains a BM-SC service ID identifying the selected MBMS service. The UE monitors an FACH if it is in a Cell_FACH state, and a DCH if it is in a Cell_DCH state. Upon receipt of an MBMS SERVICE RESPONSE 1 message, the RRC layer of the UE stores an RNC service ID included in the received message in step 1204. Upon receipt of an MBMS SERVICE NOTIFY 1 message in step 705, the UE detects service IDs from the received message and decides whether to receive the MBMS service in step 706. If the UE decides to receive the MBMS service, it transmits an MBMS SERVICE NOTIFY RESPONSE 1 message to the RNC in step 707.

Upon receipt of an MBMS RADIO BEARER SETUP message in step 1208, the UE MAC layer checks the TCTF of TBs received on a corresponding channel, that is, on the FACH and transmits TBs with a TCTF of 01000000 to the RLC layer. The RLC layer then forms a message with the received TBs and transmits the message to the RRC layer. The RRC layer then perceives that the message contains MBMS radio bearer setup information from the message type of the message. In step 1209, the UE checks UE ID information included in the MBMS RADIO BEARER SETUP message since it has been received on a CCCH. If an RNC service ID is coded in the UE ID information, the RRC layer configures a physical layer using the MBMS channel configuration information included in the MBMS RADIO BEARER SETUP message in step 1210. On the contrary, if neither RNC service ID nor the ID of the UE is not coded in the UE ID information, the RRC layer awaits data from the RLC layer. If the ID of the UE is coded in the UE ID information in step 1209, the UE operates according to the information included in the MBMS RADIO BEARER SETUP message, which is beyond the scope of the present invention and will not be described herein.

In step 1211, the UE transmits an MBMS RADIO BEARER SETUP COMPLETE message to the RNC. The UE then starts to receive MBMS streams at an action time set in the MBMS RADIO BEARER SETUP message in step 1212.

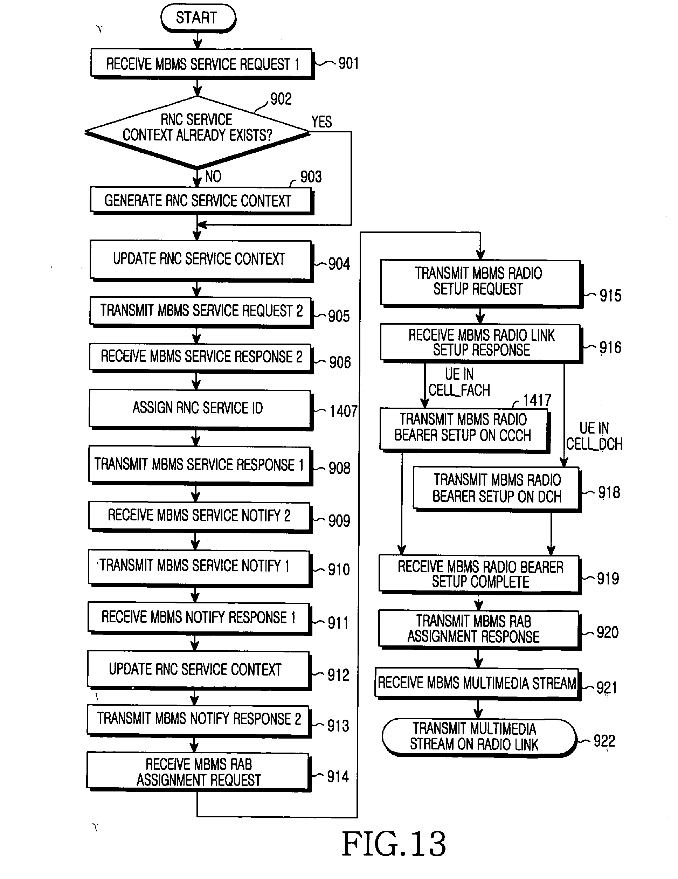

The operation of the UTRAN, that is, the RNC according to the third embodiment of the present invention will be described with reference to FIG. 13.

FIG. 13 is a flowchart illustrating the operation of the UTRAN according to the third embodiment of the present invention. Like reference numerals denote the same steps as illustrated in FIG. 9.

Referring to FIG. 13, upon receipt of an MBMS SERVICE REQUEST 1 message in step 901, the RNC determines whether an RNC service context exists for a BM-SC service ID included in the received message in step 902In the absence of the RNC service context, the RNC generates a new RNC service context corresponding to the BM-SC service ID in step 903 and proceeds to step 904. On the contrary, in the presence of the RNC service context, the RNC updates the RNC service context with the ID of a UE that transmitted the message and the ID of its cell in step 904.

In step 905, the RNC transmits an MBMS SERVICE REQUEST 2 message containing the UE ID to the SGSN. The SGSN then finds out the UE and the RNC that want to receive the MBMS service from the MBMS SERVICE REQUEST 2 message. The RNC receives an MBMS SERVICE RESPONSE 2 message from the SGSN in response to the MBMS SERVICE REQUEST 2 message in step 906. If the MBMS service is new, the RNC assigns a corresponding RNC service ID in step 1407. If the RNC service context already exists for the MBMS service, it contains the RNC service ID.

The RNC transmits an MBMS SERVICE RESPPONSE 1 message containing the RNC service ID to the UE in step 908. Upon receipt of an MBMS SERVICE NOTIFY 2 message from the SGSN in step 909, the RNC transmits an MBMS SERVICE NOTIFY message to UEs registered in the RNC service context in step 910. Upon receipt of an MBMS SERVICE NOTIFY RESPONSE 1 message from UEs in step 911, the RNC updates the RNC service context with the IDs of the UEs and their cells in step 912.

The RNC transmits an MBMS SERVICE NOTIFY RESPONSE 2 message to the SGSN in step 913. Upon receipt of an MBMS RAB ASSIGNMENR REQUEST message from the SGSN in step 914, the RNC prepares to establish radio channels based on QoS information included in the received message. That is, the RNC transmits an MBMS RADIO LINK SETUP REQUEST message to the Node Bs of the UEs registered in the RNC service context. Here, the MBMS RADIO LINK SETUP REQUEST message contains radio channel configuration information related to the MBMS service and the Node Bs configures the transmitter 810 or the physical layer 1540 based on the radio channel configuration information. The Node Bs then transmit MBMS RADIO LINK SETUP RESPONSE messages to the RNC. Upon receipt of the MBMS RADIO LINK SETUP RESPONSE messages in step 916, the RNC transmits a single MBMS RADIO BEARER SETUP message to UEs in the Cell_FACH state on an FACH/CCCH in step 1417 and as many MBMS RADIO BEARER SETUP messages as UEs to the UEs in the Cell_DCH state on DCHs in step 918. In the former case, the RNC service ID is set in the UE ID field of the message and the message is processed in the RLC layer 1520-1 and the TCTF inserter 1530-3 prior to transmission . From the view of the RNC, there are UEs which are in the state of Cell_FACH and/or Cell_DCH. The RNC selects contents of the MBMS RADIO BEARER SETUP message according to the UE state and transmits the MBMS RADIO BEARER SETUP message to the corresponding UE.
Upon receipt of MBMS RADIO BEARER SETUP COMPLETE messages from UEs in step 919, the RNC transmits an MBMS RAB ASSIGNMENT COMPLETE message to the SGSN, notifying completed radio channel setup for the MBMS service in step 920, receives MBMS streams from the SGSN in step 921, and transmits the MBS streams to the UEs via the radio channels in step 922.

In accordance with the present invention as described above, radio channel configuration information is broadcast on a common channel to UEs requesting the same MBMS service in a mobile communication system, thereby removing message transmission and reception load.

While the invention has been shown and described with reference to certain preferred embodiments thereof, it will be understood by those skilled in the art that various changes in form and details may be made therein without departing from the spirit and scope of the invention as defined by the appended claims.

## Claims

1. A method of transmitting multimedia broadcast/multicast service (MBMS) control information in a mobile communication system supporting the MBMS service, comprising the steps of:
assigning a service ID to the MBMS service upon receiving a request for a MBMS service from at least one user equipment (UE); and
transmitting to the at least one UE a medium access control (MAC) message containing the service ID and control information of the MBMS service.

2. The method of claim 1, wherein the MAC message is transmitted on a common channel.

3. The method of claim 2, wherein the common channel is a forward access channel (FACH).

4. A method of transmitting multimedia broadcast/multicast service (MBMS) control information in a mobile communication system supporting the MBMS service, comprising the steps of:
assigning a service ID to the MBMS service upon receiving a request for a MBMS service from at least one user equipment (UE); and
transmitting to the at least one UE a medium access control (MAC) message containing the service ID, a target channel type field (TCTF) identifying a channel to deliver control information of the MBMS service, and the MBMS control information.

5. The method of claim 4, wherein the MAC message is transmitted on a common channel.

6. The method of claim 1, wherein the service ID is an MBMS-radio network temporary identifier (M-RNTI).

7. An apparatus for transmitting multimedia broadcast/multicast service (MBMS) control information in a mobile communication system supporting the MBMS service comprising:
a controller for assigning a service ID to the MBMS service upon receiving a request for an MBMS service from at least one user equipment (UE); and
a medium access control (MAC) message generator for generating a MAC message containing the service ID and control information of the MBMS service.

8. The apparatus of claim 7, wherein the MAC message generator comprises:
a multiplexer (MUX) for multiplexing the control information; and
a service ID inserter for inserting the service ID into the control information.

9. The apparatus of claim 7, further comprising a transmitter for transmitting the MAC message on a common channel.

10. An apparatus for transmitting multimedia broadcast/multicast service (MBMS) control information in a mobile communication system supporting the MBMS service, comprising:
a controller for assigning a service ID to the MBMS service upon receiving a request for an MBMS service from at least one user equipment (UE), and deciding a target channel type field (TCTF) identifying a channel to deliver control information of the MBMS service; and
a medium access control (MAC) message generator for generating a MAC message containing the service ID, the TCTF, and the MBMS control information.

11. The apparatus of claim 10, wherein the MAC message generator comprises:
a multiplexer (MUX) for multiplexing the control information; and
a service ID inserter for inserting the service ID into the control information.

12. The apparatus of claim 10, further comprising a transmitter for transmitting the MAC message on a common channel.

13. A method of receiving multimedia broadcast/multicast service (MBMS) control information in a mobile communication system supporting the MBMS service, comprising the steps of:
receiving a service ID identifying the MBMS service after requesting an MBMS service ;
receiving on a common channel a medium access control (MAC) message containing a service ID and control information of an MBMS service; and
performing a control operation according to the MBMS control information if the service ID included in the MAC message is identical to the service ID identifying the requested MBMS service.

14. The method of claim 13, wherein the common channel is a forward access channel (FACH).

15. A method of receiving multimedia broadcast/multicast service (MBMS) control information in a mobile communication system supporting the MBMS service, comprising the steps of:
receiving a service ID identifying the MBMS service after requesting an MBMS service ;
receiving on a common channel a medium access control (MAC) message containing a service ID, a target channel type field (TCTF), and control information of an MBMS service; and
performing a control operation according to the MBMS control information if the service ID included in the MAC message is identical to the service ID identifying the requested MBMS service.

16. The method of claim 15, wherein the TCTF identifies a channel that delivers the MBMS control information.

17. An apparatus for receiving multimedia broadcast/multicast service (MBMS) control information in a mobile communication system supporting the MBMS service, comprising:
a receiver for receiving a service ID identifying the MBMS service, after requesting an MBMS service and receiving on a common channel a medium access control (MAC) message containing a service ID and control information of a MBMS service; and
a service ID detector for performing a control operation according to the MBMS control information if the service ID included in the MAC message is identical to the service ID identifying the requested MBMS service.

18. The apparatus of claim 17, wherein the common channel is a forward access channel (FACH).

19. An apparatus for receiving multimedia broadcast/multicast service (MBMS) control information in a mobile communication system supporting the MBMS service, comprising:
a receiver for receiving a service ID identifying the MBMS service after requesting an MBMS service and receiving on a common channel a medium access control (MAC) message containing a service ID, control information of an MBMS service, and a target channel type field (TCTF) identifying a channel that delivers the MBMS control information; and
a service ID detector for performing a control operation according to the MBMS control information if the service ID included in the MAC message is identical to the service ID identifying the requested MBMS service.

20. The apparatus of claim 19, wherein the common channel is a forward access channel (FACH).
